# EUROPEAN PATENT APPLICATION

(11) **EP 2 333 332 A1**
(43) Date of publication of application: **15.06.2011**
(21) Application number: 09075543.0
(22) Date of filing: 08.12.2009
(51) Int. Cl.: F03G 7/00, F02C 5/04

(54) **Device to convert chemical energy into motion**

(71) Applicant: Van der Wel, Marinus Adrianus Maria, 5037 PH Tilburg (NL)
(72) Inventor: Van der Wel, Marinus Adrianus Maria, 5037 PH Tilburg (NL)

(57) **Abstract**

Device (figure 1 and 2) enables conversion of chemical energy into motion by means of combusting flammable gasses in the four compartments one at a time, whereby each compartment is formed by the space between two blades (5,7) that as a result of the combustion revolve in opposite direction in a closed cilindrical housing around a common pivot point. The motion of the x-blades that is transferred via the axis of each x-blade can be used to drive a machine. A configuration where one blade is fixed to the housing and only one blade is allowed to twist is also possible.

## Description

### Field of invention

The invention concerns a device that is capable of transforming chemical energy, that is the result of combusting flammable gasses, into motion.

### Background of the invention

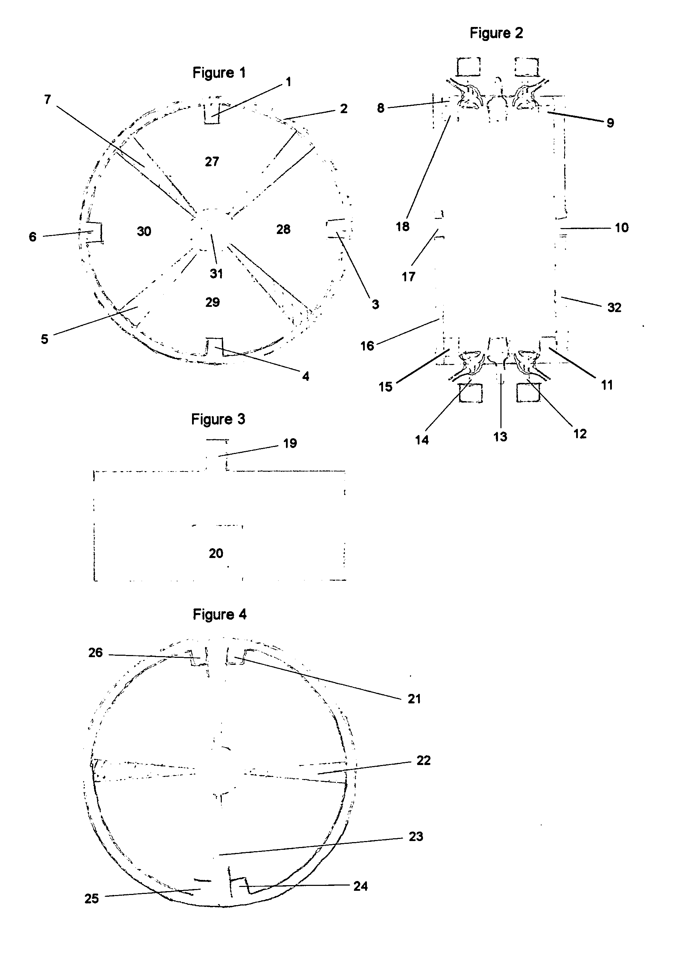

The invention concernes a device (figure 1 and 2) cabable of converting chemical energy into motion by means of combusting flammable gasses in the space between two blades (5,7) of equal size that revolve in a closed housing around a common pivot point. The blades are pushed away from each other by the force of the explosion. The motion of the blades that is transferred via the axis of each blade can be used to drive a machine.

The state of the art includes a cilindrical housing (2). This housing is closed on both sides by means of plates (16,32) (called housing plates from now on) that have a circular shape. The housing plates have a small circular hole (10,17) in the middle. In the divice two rectangular blades (7) and (5) of equal size (called x-blades from now on) are positioned. The length of each x-blade is equal to the diameter of each housing plate measured on the inside of the housing. The width of each x-blade is equal to the distance between the two housing plates measured on the inside of the housing (2). Both x-blades are positioned in the housing in such a way that there edges are everywhere in touch with the housing. The longer sides are in touch with the housing plates (32,16) and the short sides are in touch with the cilindrical part of the housing (2,8). Because of their position both x-blades can revolve around their central point (seen from above, where above means looking from the outside in the direction of one of the housing plates). Both x-blades have an axis (31,19) attached in the middle. Oposite the axis a rectangular opening (20) is created that enables both x-blades to as it where hook in to one another. This means that the closed part situated between the open part (20) and the axis (19) of an x-blade slides into the open part of the other x-blade and vice-versa). The closed part of each x-blade (part of the x-blade between the open part and the axis) is cilindrical in shape. This cilindrical part is in line with the cilindrical shaped axis of the x-blade (the axis is positioned in the middle of the cilindrical middle part of the blade). The rectangular (seen from the side) parts of each x-blad that are positioned alongside the cilindrical middle part are wedge shaped (seen from above) in such a way that the smallest diameter is located where each part is in touch with the cilindrical middle part. This shape of each x-blade enables the 'hooked' x-blades to twist with respect to one another. The maximal angle the x-blades can move is such that both x-blades can be in touch with the same limitors. The axis of each x-blade penetrates the circular hole (17,10) in one of the two housing plates (16,32). In this way each x-blade can revolve around its own axis, but still move independent of one another. The maximal twisting angle of each x-blade is limited by eight peaces of metal (1,3,4,6,18,9,11,15) (called limitors from now on) that are mounted at four positions (two opposite one another ― as seen from above - at each position, so in total 8 positions) (each 90 degrees apart from one another) on the inside of the housing against the cilindrical wall. Because of these limitors the x-blades are allowed only to move about 90 degrees back and fourth before hitting them. Each axis of the x-blades extends to the outside the housing. This configuration of the x-blades (that resembles the letter 'X') enables both x-blades to twist to the point where they hit the limitors and back. This means that the maximal angle between both x-blades is a little less than 180 degrees, the minimal angle is a little bit more than 0 degrees (its not exactly 0 and 180 degrees since the thickness of the x-blades plus the thickness of the limitors prevents this). As a result of the position of the x-blades four compartments are created (27,28,29,30). The volume of each compartment can vary between a minimal value that is equal to the space between two x-blades when they are in touch with the same limitors (for instance compartment 27 has its minimal volume when both x-blades are in touch with the limitors at position 1) and a value that is a little bit less than half the total inner volume of the housing (for instance compartment 27 has its maximal volume when x-blade 7 is in touch with the limitors at position 6 and 3 and when x-blade 5 is also in touch with the limitors at position 3 and 6).

At the same positions as the limitors (seen from above) but between two limitors that are positioned opposite one another (seen from above) space remains in the housing for an inlet valve (14), an outlet valve (12) and also for an ignition device (13) (which is only to be used in case a gas mixture is used that does not ignite spontaneously as a result of the high temperatures that are the result of compression). This means that every compartment has one inlet valve, one outlet valve and - if necessary - one ignitor (spark plug). In order to explain the workings we must assume that the starting position of the x-blades is such that they touch limitors at positions (1) and (4). From now on the following happens:
Phase one:
   Closing outlet valve of compartment 27
   Opening inlet valve of compartment 27
   Opening outlet valve of compartment 28
   [Firing of ignitor of compartment 29]
   Closing inlet valve of compartment 30
Phase two:
   Closing inlet valve of compartment 27
   Closing outlet valve of compartment 28
   Opening inlet valve of compartment 28
   Opening outlet valve of compartment 29
   [Firing of ignitor of compartment 30]
Phase three:
   [Firing of ignitor of compartment 27]
   Closing inlet valve of compartment 28
   Closing outlet valve of compartment 29
   Opening inlet valve of compartment 29
   Opening outlet valve of compartment 30
Phase four:
   Opening outlet valve of compartment 27
   [Firing of ignitor of compartment 28]
   Closing inlet valve of compartment 29
   Closing outlet valve of compartment 30

### Opening inlet valve of compartment 30

After the fourth phase, one complete cycle has been completed and the process starts again with phase one. Between each phase the x-blades move about 180 degrees with respect to one another as a result of combustion in one of the four compartments. Each compartment cycles through the following four phases:
* Inlet phase (mixture of combustable gasses is sucked into the chamber): In this phase the compartment's inlet valve is in open position the outlet valve is closed.
* Compression phase (the mixture of combustable gasses is compressed): In this phase both valves are closed.
* Combustion phase (the mixture of combustable gasses is ignited): In this phase both valves remain closed.
* Outlet phase (the combusted mixture of gasses is pushed out of the chamber): In this phase the compartment's outlet valve is in open position the inlet valve is closed.

The ignition of the combustable gasses must be done in an active way by means of firing an ignition device like a spark plug when combustable gasses are used that do not sponteneously ignite (as a result of the high pressure/temperature of the mixture when it is compressed). If a mixture of gasses is used that do spontenously ignite usage of an ignition device is not necessary. The opening and closing of the valves must preferably be done by means of electric solenoid actuators that are attached to the valves. These actuators must set the valves in motion at the right moment by means of an electronic circuit that determines the 'right moment' by 'looking' at the position of the x-blades by means of sensors that measure the position of the axis of one of the two x-blades. If ignitors (spark plugs) are used the firing and timing of them must also be done in the same way as firing and timing of the valves. The mixture of the combustable gasses (air and gasoline or diesel for instance) can be done in the same whay as is done with a piston engine, there is no diffence here. In stead of electrically opening and closing the valves by means of solenoid devices, mechanical constructions for this purpose (similar to a piston engine) are also possible but this will make the design more complex.

Claim 1 concernes the workings principle of the described device that makes use of two x-blades that can move independently from one another.

Because of the fact that each x-blade moves back and fourth in the housing the axes that are attached to them are also making this motion. Each axis (31,19) will twist about 90 degrees in one direction followed by twisting about 90 degrees in the opposite direction. By connecting each axis to electricity generators (dynamos) alternating current can be generated. If this is done by using the right type of generator there will be no need to convert the back and fourth motion into a revolving motion by means of complex machanical components. This makes shure the the total configuration remains compact and leight weighted.

In stead of two moving x-blades a configuration with one fixed x-blade and one moving x-blade is also possible (see figure 4). In such a configuration the limitors (26,21,24,25) are fixed to both sides of the fixed x-blade (23) on one side and also on the other side (this means that the fixed x-blade is in touch with all limitors). The other x-blade (22) is than allowed to move approximately 180 degrees back and forth. Only the axis of the moving x-blade can than be used to drive attached devices. Claim 2 concernes the workings principle of this configuration.

Because of the simplicity of the construction it is to be expected that the described device will be relatively light weighted and compact in comparison with a traditional piston engine with the same power output. Because it is to be expected that the highest efficiency with regard to energy conversion will be achieved when the engine is used for generating electricity (in the described way) and also because of the mentioned relative small size and weight, the most suitable application for this engine may be to function as a back-up engine (for recharging batteries) in cars that are driven by (an) electric motor(s).

### Explanation of drawings:

Figure 1:
   This figure shows an engine device with two movable x-blades (5) and (7) as seen from above. Both x-blades (also seen from above) devide the internal space of the housing (2) into four compartments (27,28,29,30). Valves and ignitor (spark plug) have not been drawn here. X-blade (7) has its axis penetrating the hole in the middle of the housing plate on the far side, x-blade (5) has its axis (31) penetrating the hole in the middle of the housing plate on the front side. The housing plates themselves are not drawn in this figure. In this configuration the limitors at positions 1,3,4 and 6 are spaced 90 degrees from one another and are therefore allowing both x-blades to twist about 90 degrees back and forth.
Figure 2:
   This figure shows the engine as seen from a side. Both x-blades have not been drawn here. The valves and ignotors (spark plugs) for compartment (27) are drawn on top but are not numbered. The inlet valve (14), outlet valve (12) and ignitor (13) for compartment (29) are also drawn. The valves and ignitors for compartments (28) and (30) have not been drawn here but they are positioned in the middle of the drawing on opposite sides of the housing.
Figure 3:
   This figure shows one x-blade (both x-blades have exactly the same shape) as seen from a side. The opening in the x-blade is numbered (20), the axis of the x-blade is numbered (19).
Figure 4:
   This figure shows an engine device with one fixed (23) and one movable (22) x-blade as seen from above. As can be seen on this drawing all limitors (at positions 26,21,24 and 25) are positioned adjacent to the fixed x-blade. This configuration allows the movable x-blade to move almost 180 degrees back and forth with respect to the other x-blade (in stead of about 90 degrees as is the case in the two movable x-blades configuration)

## Claims

1. Principle of workings of a device (figure 1 and 2) capable of converting chemical energy into mechanical motion by means of combusting flammable gasses in the space between two blades (5,7) that as a result of the combustion revolve in opposite direction in a closed cilindrical housing around a common pivot point. The motion of the x-blades that is transferred via the axis of each x-blade can be used to drive a machine.

2. A device (figure 4) as in claim 1 with the difference that one of the two blades remaines in fixed position within the housing.
